# EUROPEAN PATENT APPLICATION

(11) **EP 1 729 440 A1**
(43) Date of publication of application: **06.12.2006**
(21) Application number: 06252846.8
(22) Date of filing: 01.06.2006
(51) Int. Cl.: H04L 7/033

(54) **Determining synchronization error**

(30) Priority: 01.06.2005 US 143300
(71) Applicant: AGILENT TECHNOLOGIES, INC. (A Delaware Corporation), Palo Alto, CA 94306 (US)
(72) Inventor: Corredoura, Paul L., Loveland, CO 80537-0599 (US)
(74) Representative: Powell, Stephen David

(57) **Abstract**

A method for determining a synchronization error of a local clock (52) by deriving fractional clock period error information, which enables increased accuracy in local clock synchronization without increasing local clock frequency, a system for generating a timing message (16) in response to a master clock (30) and includes an error measurement circuit (72) that determines a synchronization error for a local clock (52) in response to the timing message (15) such that the synchronization error includes a fraction of a period of the local clock (52).

## Description

A wide variety of systems may include multiple clocks. For example, a distributed system may include multiple network nodes with each network node having its own local clock. In another example, a modular system may include multiple modular components with each component having its own local clock.

A system having multiple clocks may include a mechanism for synchronizing the time held in the clocks. For example, a clock synchronization mechanism may include a master clock and a mechanism for determining a synchronization error between a time held in the master clock and a time held in a local clock in a network node or modular component. A synchronization error may be used tc determine a correction to be applied to a local clock to bring it into synchronization with the master clock.

Prior mechanisms for determining a synchronization error may create a ceadband in clock synchronization that depends on a frequency of a local clock. For example, a prior mechanism for determining a synchronization error may compare a time held a local clock to a time held in a master clock. In addition, a local clock may be implemented as a counter that updates its time once per period of its local oscillator. As a consequence, a prior mechanism for determining a synchronization error may detect a difference between a master clock and a local clock at most once per period of the local clock, thereby creating a deadband equal to the period of the local clock.

One method for reducing the deadband in a clock synchronization mechanism that depends on a frequency of a local clock to increase the frequency of a local oscillator that drives the local clock.
Unfortunately, such a method may increase power consumption and may increase the cost of circuitry in a network node or modular component that contains the local clock.

Techniques are disclosed for determining a synchronization error of a local clock by deriving fractional clock period error information. The present techniques enable increased accuracy. in local clock synchronization without increasing local clock frequency. A system for determining a synchronization error according to the present techniques generates a timing message in response to a master clock and includes an error measurement circuit that determines a synchronization error for a local clock in response to the timing message such that the synchronization error includes a fraction of a period of the local clock.

Other features and advantages of the present invention will be apparent from the detailed description that follows.

The present invention is described with respect to particular exemplary embodiments thereof and reference is accordingly made to the drawings in which:
**Figure 1** shows a distributed system that incorporates to the present teachings for determining a synchronization error of a local clock by deriving fractional clock period error information;
**Figure 2** illustrates a timing feature of a master clock in relation to a local clock;
**Figure 3** illustrates a circuit for measuring a phase difference AT between a master clock and a local clock in one embodiment;
**Figure 4** illustrates a circuit for measuring a phase difference AT between a master clock and a local clock in another embodiment;
**Figure 5** shows circuitry in an error measurement circuit according to the present teachings for generating a synchronization error including fractional clock period information.

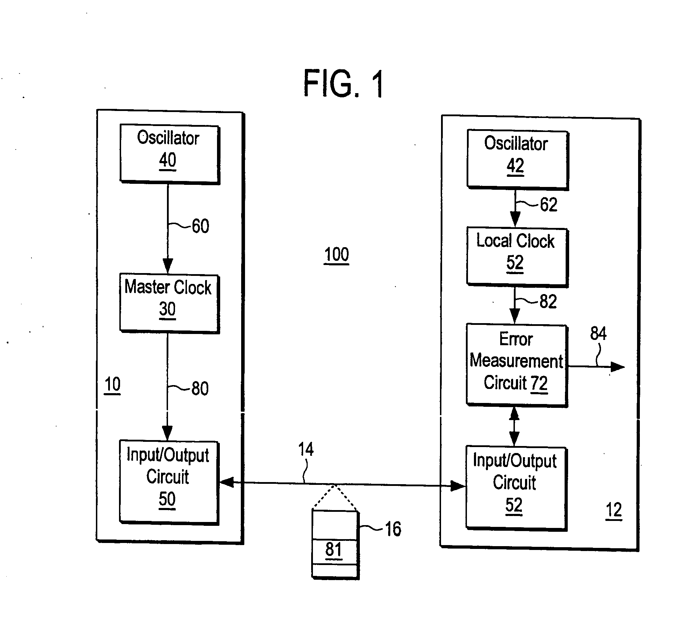

**Figure 1** shows a distributed system 100 that incorporates to the present teachings for determining a synchronization error 84 of a local clock 32 by deriving fractional clock period error information. The distributed system 100 includes a pair of components 10 and 12 having respective clocks - a master clock 30 in the component 10 and the local clock 32 in the component 12. The component 12 includes an error measurement circuit 72 that generates the synchronization error 84 in response to the local clock 32 and a timing feature associated with the master clock 30.

The master clock 30 generates a master time 80 in response to an oscillator signal 60 generated by an oscillator 40 in the component 1C. The local clock 32 generates a local time 82 in response to an oscillator signal 62 generated by an oscillator 42 in the component 12. The master clock 30 and the local clock 32 may each include a counter/register for holding counter values that represent time. In one embodiment, the master clock 30 updates the master time 80 on rising edges of the oscillator signal 60 and the local clock 32 updates the local time 82 on rising edges of the oscillator signal 62.

The components 10 and 12 include an input/output circuit 50 and an input/output circuit 52, respectively, that enable communication via a communication link 14 between the components 10 and 12. The input/output circuit 50 generates a timing message 16 in response to the master time 80 from the master clock 30 and transfers the timing message 16 via the communication link 14. The timing message 16 carries a sample 81 of the master time 80.

The error measurement circuit 72 obtains the timing message 16 and uses it to generate the synchronization error 84. The synchronization error 84 indicates a difference between the sample 81 of the master time 80 carried in the timing message 16 and a sample of the local time 82. The synchronization error 84 includes a difference in the values of the samples of the master clock 30 and the local clock 32 along with a fractional clock period error between the master clock 30 and the local clock 32. The fractional clock period error information in the synchronization error 84 may be used to improve the performance of a feedback controller of a clock synchronization mechanism by providing finer synchronization error resolution.

In one embodiment, the error measurement circuit 72 derives the fractional clock period error information in the synchronization error 84 using a timing feature associated with the timing message 16. The timing feature of the timing message 16 may be an arrival time of the timing message 16 at the component 12. The timing feature may be associated with a predetermined bit pattern in the timing message 16.

The input/output circuit 52 may generate a signal in response to detection of :he timing feature of the timing message 16 and provide the signal to the error measurement circuit 72. For example, the input/output circuit 52'may generate a signal when the timing message arrives via the communication link 14. In another example, the input/output circuit 52 may generate a signal when a predetermined bit pattern in the timing message 16 is detected on the communication link 14.

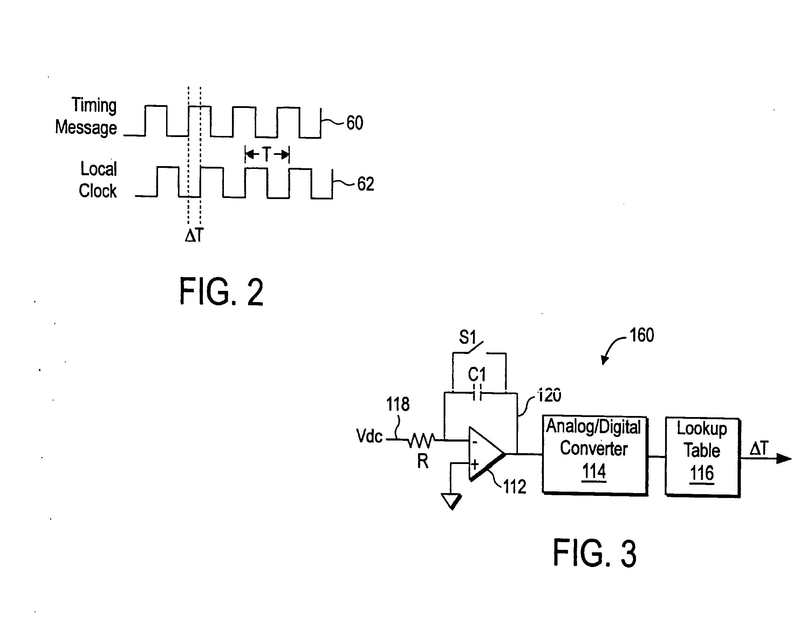

**Figure 2** illustrates a timing feature of the master clock 30 in relation to the oscillator signal 62 that drives the updates of the local clock 32. The timing feature of the master clock 30 is related to the oscillator signal 60 which drives the updates of the master clock 30 and which driven the transmission of the timing message 16 by the input/output circuit 50. The edges of the oscillator signal 60 and the oscillator signal 62 in the example shown have a phase difference of AT. The phase difference AT is a fraction of the period T of the oscillators 60 and 62, i.e. a fractional period of the master and local clocks 30 and 32. The error measurement circuit 72 measures the phase difference ΔT and uses it as the fraction clock period error in the synchronization error 84.

**Figure 3** illustrates a circuit 160 in the error measurement circuit 72 for measuring the phase difference AT in one embodiment. The circuit 160 includes an amplifier 112, a resistor R, a switch S1, a capacitor C1, an analog/digital converter 114, and a lookup table 116. An input 118 of the amplifier 112 is applied with a DC voltage Vdc.

The error measurement circuit 72 opens the switch S1 when a timing feature of the timing message 16 is detected. The opening of the switch S1 causes a ramp in the voltage at a node 120 between the output of the amplifier 112 and an input to the analog/digital converter 114. The next rising edge of the local oscillator signal 62 causes the error measurement circuit 72 to sample the voltage at the node 120 using the analog/digital converter 114. The sampled voltage is converted to the phase difference AT by the contents of the lookup table 116. The contents of the lookup table 116 may be determined by a calibration procedure.

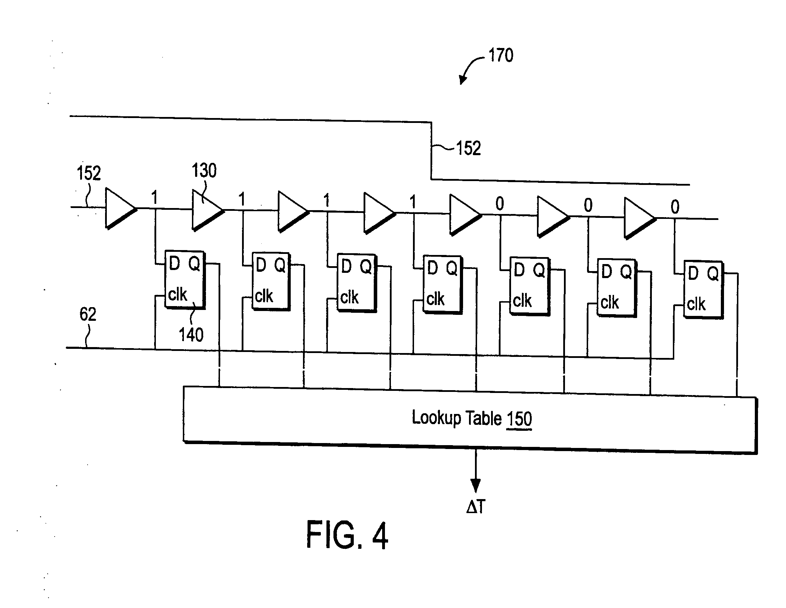

**Figure 4** illustrates a circuit 170 in the error measurement circuit 72 for measuring the phase difference AT in another embodiment. The circuit 170 includes a line 130 of delay elements, e.g. a chain of logic gates, and a line 140 of D-type flip-flops, and a lookup table 150.

The error measurement circuit 72 applies a timing feature 152 of the timing message 16 to the line 130 of delay elements and the timing feature 152 propagates through each delay element in the chain. For example, the timing feature 152 may be an edge that indicates the receipt of the timing message 16 by the input/output circuit 52 or an edge that indicates a detection of a predetermined bit pattern in the timing message 16 by the input/output circuit 52. A rising edge of the oscillator signal 62 causes each flip-flop in the line 140 to sample an output of the corresponding delay element in the line 130. The logic pattern, e.g. the pattern shown of 1111000, indicates the timing the timing feature 152 with respect to the rising edge of the oscillator signal 62. The logic pattern in the flip-flops of the line 140 is converted into the phase difference AT by the contents of the lookup table 150. The contents of the lookup table 150 may be preprogrammed by experimentation.

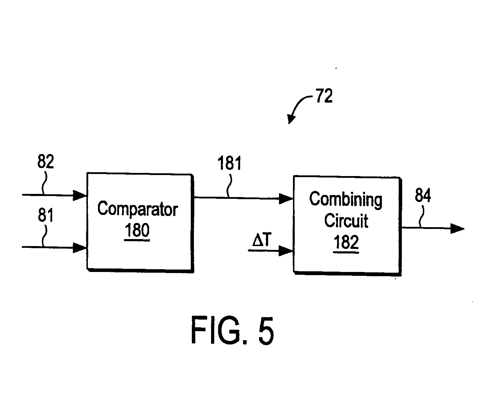

**Figure 5** shows circuitry in the error measurement circuit 72 for generating the synchronization error 84. The error measurement circuit 72 includes a comparator 180 that generates a difference 181 between the sample 81 of the master time 80 carried in the timing message 16 and a sample of the local time 82. The measurement circuit 72 includes a combining circuit 182 that combines, e.g. adds, the phase difference AT to the difference 181. The comparator 180 may have a bit resolution that accommodates the bit resolutions of the master time 80 and the local time 82. The synchronization error 84 may be used to correct the time in the local clock 32 using known techniques.

The foregoing detailed description of the present invention is provided for the purposes of illustration and is not intended to be exhaustive or to limit the invention to the precise embodiment disclosed. Accordingly, the scope of the present invention is defined by the appended claims.

## Claims

1. A system for determining a synchronization error of a local clock (52), comprising:
means for generating a timing message (16) in response to a master clock (30);
error measurement circuit (72) that determines the synchronization error in response to the timing message (16) such that the synchronization error includes a fraction of a period of the local clock (52).

2. The system of claim 1, wherein the error measurement circuit (72) determines the fraction in response to a timing feature of the timing message (16).

3. The system of claim 2, wherein the error measurement circuit (72) determines the synchronization error by combining the fraction with a difference between a sample of the master clock (30) and a sample of the local clock (52).

4. The system of claim 2, wherein the error measurement circuit (72) determines the fraction by measuring a phase difference between the timing feature and the local clock (52).

5. The system of claim 1, wherein the timing feature is an arrival time of the timing message (16).

6. A method for determining a synchronization error of a local clock (52), comprising:
generating a timing message (16) in response to a master clock (30);
determining the synchronization error in response to the timing message (16) such that the synchronization error includes a fraction of a period of the local clock (52).

7. The method of claim 6, wherein determining the synchronization error includes determining the fraction in response to a timing feature of the timing message (16).

8. The method of claim 7, wherein determining the synchronization error includes determining the synchronization error by combining the fraction with a difference between a sample of the master clock (30) and a sample of the local clock (52).

9. The method of claim 7, wherein determining the fraction includes measuring a phase difference between the timing feature and the local clock (52).

10. The method of claim 6, wherein the timing feature is an arrival time of the timing message (16).
